# EUROPEAN PATENT SPECIFICATION

(11) **EP 0 468 359 B1**
(45) Date of publication and mention of the grant of the patent: **22.01.1997**
(21) Application number: 91111975.8
(22) Date of filing: 17.07.1991
(51) Int. Cl.: G08C 23/00, H04B 13/02

(54) **Arrangement for the transmission of measured values**
Anordnung zur Übertragung von Messwerten
Dispositif pour la transmission de valeurs mesurées

(30) Priority: 24.07.1990 DE 4023457
(43) Date of publication of application: 29.01.1992
(73) Proprietor: TEXAS INSTRUMENTS DEUTSCHLAND GMBH, D-85356 Freising (DE)
(72) Inventor: Schurmann, Josef, W-8051 Oberhummel (DE)
(74) Representative: Leiser, Gottfried, Dipl.-Ing.

(56) References cited:
- EP-A- 0 356 741
- FR-A- 1 465 366
- FR-A- 2 408 788
- US-A- 3 407 002

## Description

The invention relates to an arrangement for the transmission of measured values as defined in the precharacterizing part of claim 1.

From EP 0 356 741 A an arrangement is known which makes it possible to transmit the consumption value determined by a gas meter via the gas pipe network installed in a building to a central station in the building at which consumption values of a plurality of gas meters are collected and passed on to a gas supply company. The signal transmission here is with the aid of high-frequency signals which are inductively coupled into the pipe network at the respective location of the gas meter. As coupling elements coils are used which surround the gas pipe so that the latter acts like an iron core in the coil. In each gas meter a transmitting coil and a receiving coil is provided. The inductive coupling by means of coils surrounding the pipes has numerous disadvantages. The coils can be attached only if the pipe is severed at the attachment point. Subsequent installation into an existing pipe network therefore requires a high installation expenditure. In addition, the coils are expensive to manufacture because for example the receiving coil in the known arrangement has 46000 turns.

The transmitting coil consists of 272 turns of a wire having a diameter of 2.5 mm so that this transmitting coil requires a large amount of space.

Although the above-mentioned EP-A-0 356 741 makes use of inconductive coupling, electrical coupling of measured values to a pipe network is known from FR-A-2 408 788. However, this document does not disclose details of a means used for achieving this electrical coupling. FR-A-1 465 366 also discloses this particular manner of coupling.

US-A-3 407 002 discloses a control system for remotely controlling a longwall mining machine by the use of high frequency signals capacitively coupled into a waveguide. This document describes an extra conductor which is to be provided as a transmission means.

DE-OS 3,209,189 discloses an arrangement with the aid of which between the temperature sensors and adjusting members on radiators in individual rooms of a building on the one hand and a central station accommodated in the heating system of the building on the other control and information signals can be exchanged. For information transmission in this case the heating pipe network is used and the signals to be transmitted are coupled in the form of ultrasonic oscillations into the pipe network and tapped from said network. To ensure satisfactory signal transmission, in the known arrangement a relatively high sonic energy must be employed because the transmission path in larger buildings is possibly rather long. Also, the high sonic energy is necessary for reasons of safeguarding against interference because when the energy is too low the noises occurring in the usual heating operation and being propagated in the heating pipe network can lead to interferences in the signal transmission. Connecting sleeves or similar joint pieces in the pipe network effect a considerable damping and to overcome the latter the sonic energy to be applied must be set at high values. Another disadvantage is that the transmission can take place only within a closed pipe system so that for each closed pipe system a separate central station must be provided and this is complicated and therefore involves high costs. A further disadvantage is the relatively long transmission duration in the transmission of information of more complex structure. The relatively long transmission duration leads to a high current consumption in the transmitting/receiving devices and consequently a current supply with high capacitance and thus also involving relatively high costs must also be employed.

The invention is based on the problem of providing an arrangement of the type set forth at the beginning with the aid of which whilst exploiting an existing pipe network with relatively low costs and high operational reliability signal transmission can be carried out between the acquisition points and a central station.

According to the invention this problem is solved in that the transmitting/receiving devices are accommodated in a housing provided with an electrically conductive coating and couple control and information signals to be transmitted galvanically or capacitively in the form of high-frequency oscillations into the pipe network and/or galvanically or capacitively tap said signals from the pipe network by using the features contained in the characterizing part of claim 1.

In the arrangement according to the invention the signals to be transmitted are applied in the form of high-frequency oscillations galvanically or capacitively to a pipe network, for example a gas, heating or water pipe network, and the central station taps the signals from said pipe network and supplies them to their appropriate evaluation. The galvanic or capacitive coupling may be achieved with very simple means. For example, a galvanic coupling is achieved simply in that the arrangement according to the invention is fixedly screwed by means of a screw to a pipe network which is connected electrically conductively to the output of a corresponding generator emitting the high-frequency oscillations. The electrically conductive coating in the housing of the arrangement acts for the high-frequency oscillations as artificial ground or counter balance. The signal transmission in the form of high-frequency oscillations coupled galvanically or capacitively into the pipe network also permits signal transmission via pipe networks not directly connected together because the pipe network into which the high-frequency oscillations are galvanically or capacitively coupled acts like an antenna, the radiation of which is received by another pipe network not too remote therefrom so that a measured value transmission is also possible between the central station and acquisition points located in another pipe network.

Advantageously, the central station is coupled to the public telephone network so that the data collected in the central station can be called up as required by corresponding signals transmitted via the telephone network. This makes it possible for companies entrusted with measuring the heat amounts consumed at individual radiators of a building at regular intervals and compiling corresponding invoices to carry out this detection no longer by individual readings at the radiators but by remote reading via the telephone network.

The invention will now be explained by way of example with the aid of the drawings, wherein:
- Fig. 1: shows a block circuit diagram of the arrangement according to the invention and
- Fig. 2: shows a schematic illustration to illustrate one possibility of attaching an arrangement according to the invention to a radiator.

The arrangement will be described in conjunction with the reading of calorimeters which are attached to individual radiators of a building and can supply data containing the amount of heat used at the particular radiator. Calorimeters of this type are for example sold by the company Techem with the type designation EHKV 90 electronic.

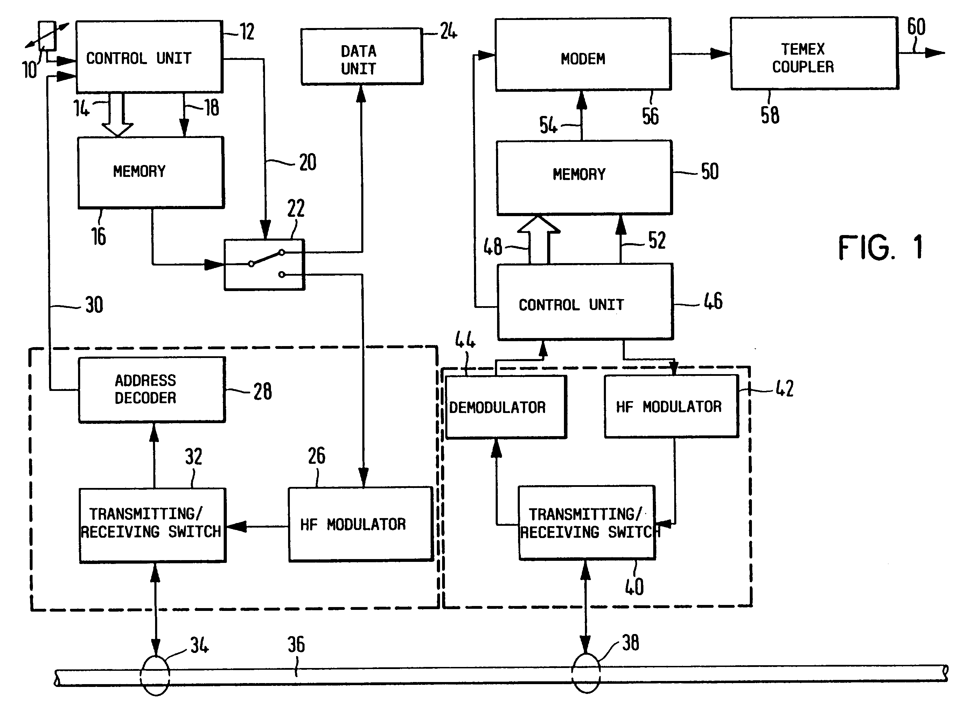

The transmission arrangement illustrated in the block circuit diagram of Fig. 1 contains at each acquisition point a sensor 10 which in the example of embodiment chosen detects the amount of heat consumed by a radiator. The sensor 10 is connected to a control unit 12 which may be formed by a microprocessor. At a data signal output 14 the control unit 12 supplies to a memory 16 the data generated by the control unit 12 from the signals of the sensor 12. For controlling the memory 16 the control unit 12 is connected via a control signal line 18 to the memory 16.

A changeover switch 22 controlled by the control unit 12 via a control signal line 20 can supply the data contained in the memory 16 either to a data unit 24 or to an HF modulator 26.

In the present example of embodiment the memory is configured in such a manner that it adds up the data values representing the data signals supplied to it by the control unit 12.

The control unit 12 can be controlled with the aid of control signals from an address decoder via a control signal line 30. The address decoder 28 is in turn in communication with a transmitting/receiving switch 32 which on the one hand can receive signals from the HF modulator 26 and pass them on to a schematically illustrated coupling means 34 and on the other hand can pass signals coming from the coupling means 34 onto the address decoder 28. The coupling means 34 effects the galvanic or capacitive coupling of the signals supplied to it by the transmitting/receiving switch 32 into a pipe 36 which is part of a heating pipe network.

The HF modulator 26, the address decoder 28 and the transmitting/receiving switch 32 form together a transmitting/receiving device with the aid of which data signals can be transmitted from the sensor 10 to the pipe 36 and control signals from the pipe 36 to the control unit 12.

The part of the transmission arrangement described so far, as mentioned above, is disposed at each acquisition point at which measured values are to be detected and passed on. The part of the transmission arrangement which is present for a larger number of acquisition points only once, i.e. a central station, will now be described.

Like every acquisition point, the central station contains a coupling means 38 which is coupled to the pipe 36 and is in connection with a transmitting/receiving switch 40. The transmitting/receiving switch 40 can receive signals from an HF modulator 42 and furnish signals to a demodulator 44. The HF modulator 42 and the demodulator 44 are in connection with a control unit 46 which via a data signal output 48 can transmit data values to a memory 50. Via a control signal line 52 the control unit 46 can control the memory 50. Via a line 54 the memory content can be transferred to a modem 56 and from the latter to a TEMEX coupler 58 which is in connection with the public telephone network via a line 60.

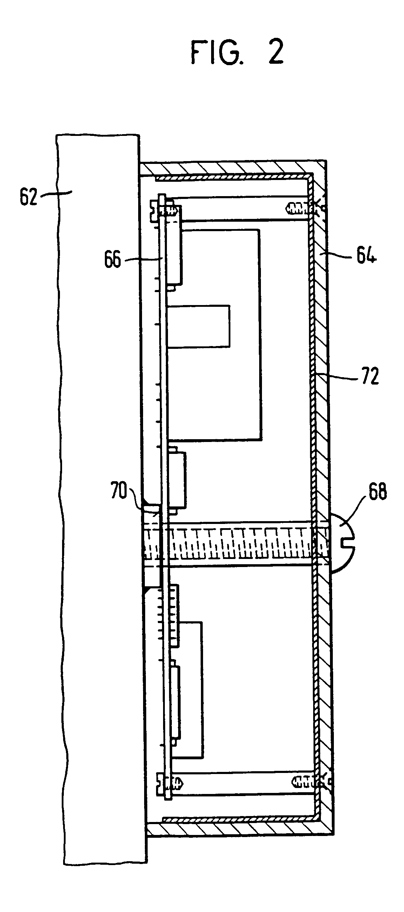

Fig. 2 shows a practical possible use of the arrangement described. It is assumed that the arrangement is attached to a radiator 62 which is indicated only schematically in Fig. 2.

The arrangement contains a housing 64 in which an electronic circuit is arranged on a printed circuit board 66. It is pointed out that here only the principle of the use of the known arrangement is being described and accordingly the internal structure is only schematically indicated.

The housing 64 is firmly screwed to the radiator 62 with the aid of a screw 68. To establish a galvanic connection between the electronics in the housing 64 and the radiator 62 the printed circuit board 66 is provided on the side facing the radiator 62 in the region of the contact point with a conducting coating 70 which is connected to the output of the HF generator which generates the HF oscillations to be transmitted. As artificial ground, also referred to as counter-poise , the housing 64 is provided on its inner surface with an electrically conductive coating 72.

With the aid of the arrangement illustrated in Fig. 2 via a temperature sensor, not illustrated, the temperature of the radiator can be detected and from said temperature with the aid of further parameters a numerical value representing the total amount of heat emitted by the radiator 62 can be generated. The electronics contained in the arrangement convert this numerical value so that it can be coupled in the form of HF oscillations galvanically into the radiator 62 and thus into the pipe network connected to said radiator.

As apparent from Fig. 2, the arrangement described can be attached very easily; it can simply be firmly screwed at the point where calorimeters hitherto employed and working by the evaporation principle were attached. The signal transmission to the radiator and the pipe network takes place with high operational reliability even if an oxide layer should be present at the contact point between the printed circuit board 66 and the radiator and prevent a directly electrically conductive connection. In this case, a capacitive coupling would be present which is also able to couple the signals into the pipe network.

The arrangement described operates as follows:

The control unit 12 formed by a microprocessor is programmed so that it interrogates the sensor 10 at regular intervals and converts the output signals thereof to storable measured values. These measured values are entered into the memory 16 via the data signal output 14. The time interval between the individual acquisition operations may be relatively short so that for example the sensor signals are sampled several times per hour and after corresponding conversion stored in the memory 16. In the memory 16 the measured values are summated. Since the sensor 10 detects the amount of heat emitted by a radiator the memory 16 always contains the total amount of heat issued by the particular radiator. In the position of the changeover switch 22 illustrated in the drawings the numerical value representing the total amount of heat goes to the display unit 24 so that it can be read off at said unit.

The control unit 46 of the central station, which is likewise constituted by a microprocessor, is programmed so that at regular intervals it initiates interrogation cycles which effect the reading of the memories 16 disposed at the individual acquisition points. The response of the individual memories is via addresses which are generated by the control unit 46 and added to the respective interrogation signals.

The interrogation signals generated by the control unit 46 are modulated in the HF modulator 42 onto an HF oscillation and the modulated HF signal generated is coupled into the pipe 36 via the transmitting/receiving switch 40 and the coupling means 38. The coupling means 34 coupled to the pipe 36 receives the HF signal and supplies it to the transmitting/receiving switch 32. In the address decoder 28 the address contained in the interrogation signal is decoded and supplied to the control unit 12. When the control unit 12 recognizes that the address supplied to it coincides with the address stored in it, signifying that it is being addressed by the control unit 46, it furnishes to the line 20 a control signal which switches the changeover switch 22 into the position in which the data values contained in the memory 16 can reach the HF modulator 26. In this HF modulator 26 the data values are modulated onto an HF oscillation which is then coupled into the pipe 36 via the transmitting/receiving switch 32 and the coupling means 34. Via the coupling means 38 and the transmitting/receiving switch 40 the modulated HF signals pass to the demodulator 44 in which they are demodulated. The data value represented by the demodulated signal is entered by the control unit 46 into the memory 50.

With the aid of the sequence outlined it is possible to consecutively interrogate the calorimeters disposed on the radiators of a building under the control of the control unit 46 and to transmit the respective data values contained in the memories 16 of the acquisition points to the memory 50 of the central station. Of course, the data values contain not only the detected value for the amount of heat but also addresses which permit a unique allocation to the radiator at which the corresponding value of the amount of heat was measured. In this manner it is possible with the aid of data stored in the memory 50 to determine the heat consumption of an apartment or part of the building in which the arrangement described is located.

Further associated with the central station is a modem 56 which via a TEMEX coupler 58 and the line 60 is in connection with the public telephone network. A TEMEX coupler is an interface between a telephone network and a system which is to be controlled and which is to be influenced via the telephone network by remote action, whether for initiating switching operations therein or for calling up data stored therein. In the present case via the TEMEX coupler 58 and the modem 56 the data stored in the memory 50 are transmitted with the aid of the telephone network to a company which is responsible for the heating costs accounting in the building in which the system described is accommodated.

The control unit 46 activates the modem 56 at a time of day at which the telephone network is not very busy, for example at night. The actual data transmission is carried out so that satisfactory transmission is ensured by corresponding test methods; these will not be explained however here in detail because numerous known transmission methods are available for this purpose.

The arrangement described may for example also be used to detect current consumption or water consumption in a building. The particular use depends only on the nature of the sensor 10 employed. In these cases the data can then be transmitted via the telephone network to the electricity and water suppliers so that reading individual meters in a building becomes superfluous.

## Claims

1. Arrangement for the transmission of measured values from a plurality of acquisition points to a central station using transmitting/receiving devices associated with the acquisition points and the central station via a pipe network (36), the transmitting/receiving devices being accommodated in a housing (64), said measured values together with control signals being galvanically or capacitively coupled to said pipe network (36) and/or being galvanically or capacitively tapped from said pipe network (36) in the form of high-frequency oscillation, characterized in that an electrically conductive coating (72) is provided on the inner surface of said housing (64) for providing an artificial ground and in that a screw (68) used for securing the housing (64) to said pipe network (36) is used for coupling the high-frequency oscillations to said pipe network (36).

2. Arrangement according to claim 1, characterized in that the pipe network (36) is a gas, heating or water pipe network fixedly installed in one or more buildings.

3. Arrangement according to claim 1 or 2, characterized by a coupling means (58) for coupling the central station to the public telephone network.

## Patentansprüche

1. Anordnung zum Übertragen von Meßwerten von mehreren Erfassungsstellen zu einer Zentrale unter Verwendung von den Erfassungsstellen und der Zentrale zugeordneten, jeweils in einem Gehäuse (64) untergebrachten Sende/Empfangsgeräten über ein Rohrleitungsnetz (36), wobei die zu übertragenden Meßwerte zusammen mit Steuersignalen in Form von Hochfrequenzschwingungen galvanisch oder kapazitiv an das Rohrleitungsnetz (36) angekoppelt und/oder galvanisch oder kapazitiv von dem Rohrleitungsnetz (36) abgegriffen werden, dadurch gekennzeichnet, daß auf der Innenfläche des Gehäuses (64) zur Bildung einer künstlichen Erde ein elektrisch leitender Belag (72) angebracht ist und daß zur Kopplung der Hochfrequenzschwingungen zu dem Rohrleitungsnetz (36) eine zum Festschrauben des Gehäuses (64) am dem Rohrleitungsnetz (36) verwendete Schraube (68) ausgenutzt wird.

2. Anordnung nach Anspruch 1, dadurch gekennzeichnet, daß das Rohrleitungsnetz (36) ein fest in einem oder mehreren Gebäuden installiertes Gas-, Heizungs- oder Wasserrohrleitungsnetz ist.

3. Anordnung nach Anspruch 1 oder 2, gekennzeichnet durch eine Kopplungsvorrichtung (58) zum Ankoppeln der Zentrale an das öffentliche Telefonnetz.

## Revendications

1. Dispositif de transmission de valeurs mesurées d'une pluralité de points d'acquisition vers une station centrale en utilisant des dispositifs d'émission/réception associés aux points d'acquisition et à la station centrale par l'intermédiaire d'un réseau (36) de canaux de communication, les dispositifs d'émission/réception étant placés dans un boîtier (64), lesdites valeurs mesurées et des signaux de commande étant couplés de façon galvanique ou capacitive audit réseau (36) de canaux de communication et/ou étant prélevées de façon galvanique ou capacitive à partir dudit réseau (36) de canaux de communication sous la forme d'oscillations à hautes fréquences, caractérisé en ce qu'un revêtement conducteur (72) est prévu sur la surface interne dudit boîtier (64) pour fournir une terre artificielle et en ce qu'une vis (68) utilisée pour la fixation du boîtier (64) au réseau (36) de canaux de communication est utilisée pour le couplage des oscillations à hautes fréquences audit réseau (36) de canaux de communication.

2. Dispositif selon la revendication 1, caractérisé en ce que le réseau (36) de canaux de communication est un réseau de communication en gaz, en chauffage ou en eau, installé de façon fixe dans un ou plusieurs immeubles.

3. Dispositif selon l'une des revendications 1 et 2, caractérisé en ce qu'il comporte des moyens de couplage (58) pour le couplage de la station centrale à un réseau de téléphone public.
